# EUROPÄISCHE PATENTSCHRIFT

(11) **EP 1 194 470 B1**
(45) Veröffentlichungstag und Bekanntmachung des Hinweises auf die Patenterteilung: **29.08.2007**
(21) Anmeldenummer: 00943963.9
(22) Anmeldetag: 01.07.2000
(51) Int. Cl.: C08G 64/18, C08G 64/02, C08G 64/30, C08G 63/64, C07C 69/96, C10M 105/48, C10M 107/32, C10M 173/00, D06M 13/232, D06M 15/513

(54) **POLYETHERESTERCARBONATE**
POLYETHER ESTER CARBONATES
POLYETHERESTERCARBONATES

(30) Priorität: 10.07.1999 DE 19932292
(43) Veröffentlichungstag der Anmeldung: 10.04.2002
(73) Patentinhaber: Cognis IP Management GmbH, 40589 Düsseldorf (DE)
(72) Erfinder: BIRNBRICH, Paul, D-42719 Solingen (DE); BIALAS, Norbert, D-41542 Dormagen (DE); MATHIS, Raymond, D-40627 Düsseldorf (DE); TENHAEF, Rolf, D-40627 Düsseldorf (DE); BECKER, Wolfgang, D-41236 Mönchengladbach (DE)
(86) Internationale Anmeldenummer: PCT/EP2000/006160
(87) Internationale Veröffentlichungsnummer: WO 2001/004176

(56) Entgegenhaltungen:
- EP-A- 0 146 234
- EP-A- 0 277 007
- EP-A- 0 511 589
- WO-A-00/14141

## Beschreibung

Die Erfindung betrifft Spinnpräparationen für synthetische Filamentfasern, die als Gleitmittel Polyestercarbonate enthalten, sowie die Verwendung derartiger Polyestercarbonate als Gleitmittel in Spinnpräparationen für synthetische Filamentfasern.

Synthetische Chemiefasern werden sofort nach dem Filamentbildungsprozeß mit Präparationsmitteln versehen, die für die Weiterverarbeitung der Fasern unentbehrlich sind. Diese in der deutschsprachigen Literatur zumeist als "Spinnpräparationen" bezeichneten Präparationsmittel (vergl. Ullmann's Encyclopädie der technischen Chemie, Band 23, Seiten 7-9, Verlag Chemie, Weinheim 1983) vermitteln den Filamenten die erforderlichen Gleiteigenschaften und zwar zwischen den Filamenten und zwischen den Filamenten und den Führungselementen der Spinnmaschinen. Darüber hinaus sollen Spinnpräparationen meist noch folgende Bedingungen erfüllen: Fadenschluß, antistatische Wirkung, gute Benetzung des Filamentes, Temperaturbeständigkeit, keine Metallkorrosion, keine Ablagerungen an den Streck- und Texturierorganen, leichte Entfembarkeit von der Faser und physiologische Unbedenklichkeit. Da die Spinnpräparationen bei der Entfernung von der Faser, z. B. vor dem Färben, ins Abwasser gelangen können, ist es darüber hinaus wünschenswert, daß sie und vor allem die in hohen Mengen in diesen enthaltenen Gleitmittel biologisch gut abbaubar sind.

Die Gleitmittel in den Spinnpräparationen sollen vor allem den Filamenten die erforderlichen Gleiteigenschaften verleihen. Darüber hinaus müssen die Gleitmittel temperaturbeständig, nicht korrosiv, von der Faser leicht entfernbar und physiologisch unbedenklich sein, damit die Anforderungen an die Spinnpräparationen erfüllt werden. Typische Gleitmittel für Spinnpräparationen sind pflanzliche, tierische und mineralische Öle oder auch synthetische Ester, Silikone, Polyether, ethoxylierte Fettsäuren und dergleichen (vergl. Ullmann's Encyclopädie der technischen Chemie, Band 23, Seiten 7-9, Verlag Chemie, Weinheim 1983).

Spinnpräparationen für synthetische Filamentfasern sollten darüber hinaus hohen thermischen Beanspruchungen standhalten, wie sie bei der Texturierung von Polyester- und Polyamidfasern auftreten. Dementsprechend werden als Gleitmittel derartiger Spinnpräparationen häufig temperaturbeständige Esteröle eingesetzt; darunter sind Ester höherer Fettsäuren mit langkettigen Fettalkoholen zu verstehen. Anstelle der temperaturbeständigen Esteröle werden auch Blockcopolymere von Polyethylenoxid-Polypropylenoxid eingesetzt, die dem Fachmann unter der Bezeichnung "Pluronics" bekannt sind. Pluronics vermögen bei höheren Temperaturen rückstandslos zu depolymerisieren. Bei der Texturierung ist dies von besonderem Vorteil, da Ablagerungen an Filamenten und Texturierorganen vermieden werden. Nachteilig ist jedoch, daß beim Texturieren die Bruchstücke der Pluronics, z. B. Aldehyde, in die Atmosphäre entweichen, was schädlich für Mensch und Umwelt sein kann. Darüber hinaus haben die Pluronics den gravierenden Nachteil, daß sie so gut wie nicht biologisch abbaubar sind. Aus der deutschen Patentanmeldung DE-A-41 13 889 sind wasserlösliche, biologisch abbaubare Polycarbonate und ihre Verwendung als Gleitmittel für Synthesegarne bekannt, die zwingend
a) mindestens einen Polyalkylenglykoletherblock
b) mindestens einen ggf. ethoxylierten Fettalkohol mit 6 bis 22 C-Atomen und
c) einen a) mit b) verbundenen Kohlensäurerest
aufweisen. Derartige Polycarbonate zeigen zwar ein akzeptables thermisches Verhalten, sind aber insbesondere in ihren Gleiteigenschaften bei höheren Geschwindigkeiten der maschinellen Verarbeitung synthetischer Filamente verbesserungsbedürftig.

Aus der europäischen Patentanmeldung EP-A-421 298 sind Gleitmittelzusammensetzungen bekannt, die Kohlensäurepolyolester enthalten und die sich durch ihre Gleitwirkung und geringe Rauchentwicklung auszeichnen. Als Anwendungsgebiete werden industrielle Getriebeöle, Motorenöle, Schmiermittel für Kühlschränke und Schmiermittel für Fasern genannt. Insbesondere zielt die Erfindung auf FKW-haltige Schmiermittelzusammensetzungen für Kühlschränke ab.

In der amerikanischen Patentschrift US 4,314,00 sind Polycarbonate aus einem niederen Alkohol und einem oder mehreren Polyoxyalkylenblöcken bekannt, die als Gleitmittel für Spinnpräparationen eingesetzt werden können. Diese Polycarbonate zeigen zwar hervorragende Wasserlöslichkeit, aber verbesserungsbedürftige Gleiteigenschaften.

Aus der europäischen Offenlegungsschrift EP-A-146234 sind Polycarbonate bekannt, die durch Umsetzung von Alkoholen mit cyclischen Carbonaten unter Decarboxylierung hergestellt und anschließend alkoxyliert werden können. Sie sind auch als Gleitmittel in Spinnpräparationen brauchbar.

Die vorliegende Erfindung geht nun von der Aufgabenstellung aus, Spinnpräparationen für synthetische Filamentfasern bereitzustellen, die Gleitmittel mit gegenüber bekannten Verbindungen verbesserten Eigenschaften enthalten. Diese Gleitmittel sollen sowohl gute Gleiteigenschaften als auch gute Wasserlöslichkeit aufweisen. Weiterhin sollten die Gleitmittel geringe Reibungskoeffizienten an Polyesterfilamenten aufweisen, insbesondere unter den harten Bedingungen der Friktionstexturierung.

Es wurde gefunden, daß bestimmte Polyestercarbonate die o. g. Anforderungen erfüllen.

In einer ersten Ausführungsform werden Polyestercarbonate der allgemeinen Formel (I) beansprucht 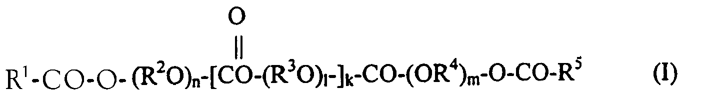 in der gilt:
- R¹, R⁵:: unabhängig voneinander lineare oder verzweigte, gesättigte oder ungesättigte Alkylreste mit 6 bis 21 C-Atomen
- R², R⁴:: unabhängig voneinander Alkylreste mit 2 bis 4 C-Atomen
- R³:: gesättigter oder ungesättigter, linearer oder verzweigter, zweiwertiger Kohlenwasserstoffrest mit 1 bis 22 C-Atomen
- k:: 0 oder 1 bis 50
- l:: 1 bis 300
- n:: 2 bis 50
- m:: 2 bis 50

Die erfindungsgemäß verwendeten Polyestercarbonate der Formel (I) werden vorzugsweise hergestellt durch Umsetzung von alkoxylierten Carbonsäuren mit Diolen in Gegenwart von Dialkylcarbonaten und basischen Katalysatoren. Die Polyestercarbonate der Formel (I), werden gemäß folgendem Herstellverfahren erhalten: Alkoxylierte Carbonsäuren der Formel (II)

R⁶-CO₂-(R⁷O)ₐ-H (II)

werden mit Diolen der Formel (III)

HO-R⁸-OH (III)

und Dialkylcarbonaten der Formel (IV)

R⁹O-CO-OR¹⁰ (IV)

wobei R⁶ für einen Alkylrest mit 6 bis 21 C-Atomen, R⁷ für einen Rest C₂H₄ und/oder C₃H₆, R⁸ für einen zweiwertigen Alkylrest mit 1 bis 22 C-Atomen und R⁹ und R¹⁰ unabhängig voneinander für eine Methyl- oder Ethylrest stehen und a eine Zahl von 2 bis 50 bedeutet, in Gegenwart von basischen Katalysatoren bei Temperaturen von 60 bis 200°C umgesetzt.

Die Reaktion der Verbindungen (II) bis (IV) erfolgt vorzugsweise durch eine gleichzeitige Umsetzung der drei Reaktanden. Während der Reaktion wird der leichterflüchtige Alkohol des Carbonats (z.B. Methanol oder Ethanol) ggf. zusammen mit überschüssigen Dialkylcarbonat abdestilliert. Wie dem Fachmann bekannt ist, bestehen unter den beschriebenen Reaktionsbedingungen neben den Verbindungen der Formel (I) noch weitere untergeordnete Polymere, beispielsweise Dimerfettsäureethoxylate. Es ist bevorzugt, das erfindungsgemäße Verfahren so auszuführen, daß die Ausgangsstoffe der Formel (II) bis (IV) im Mol-Verhältnis von etwa 1 : 1 : 1 oder im Mol-Verhältnis von etwa 2 : 1 : 2 in der angegebenen Art und Weise umgesetzt werden, um die gewünschten Verbindungen der Formel (I) zu erhalten. Besonders bevorzugt sind Molverhältnisse von 2 : 1 : 4.

Die Ausgangsverbindungen der Reaktion, nämlich alkoxylierte Carbonsäuren der Formel (II) sind an sich bekannte Verbindungen, die durch alle dem Fachmann zu diesem Zwecke bekannten Umsetzungen von Fettsäuren mit Alkoxiden hergestellt werden können. Im Rahmen der vorliegenden Erfindung sind insbesondere solche Carbonsäuren der Formel (II) bevorzugt, deren Alkylrest R⁶ 6 bis 21 C-Atome aufweist und die Fettsäure mit 2 bis 50 Mol Alkoxid umgesetzt worden sind. Geeignete Säuren für die Alkoxylierung sind beispielsweise die Heptan-, Octan-, Nonan-, Dekan-, Undekan-, Dodekan-, Tridecan-, Tetradecan-, Pentadecan-, Hexadecan-Heptadecan-, Octadecan-, Octadecan-12-ol-, Nonadecan- und Eicosansäure. Neben den hier beschriebenen gesättigten Fettsäuren können auch ungesättigte Fettsäuren eingesetzt werden, beispielsweise 10-Undecensäure, 9c-Dodecensäure, 9c-Tetradecensäure, 9c-Hexadecensäure, 6c-Octadecensäure, 6t-Octadecensäure, 9c-Octadecensäure, 9t-Octadecensäure, 9c-Octadecen-12-ol-Säure, 9c,12c-Octadecandiensäure, 9t-12t-Octadecadiensäure, 9c,12c,15c-Octadecatriensäure, 9c,11t,13t-Octadecatriensäure, 9c,11t,13t-Octadecatriensäure, 9c-Eicosensäure, 5,8,11,14-Eicosatetraensäure. Die Fettsäuren werden vorzugsweise mit Ethylenoxid und/oder Propylenoxid umgesetzt und dann weiter gemäß der obigen Beschreibung zu den Produkten der Formel (I) umgesetzt. Im Sinne der vorliegenden Erfindung ist es zwingend notwendig, daß die Fettsäuren mit mindestens 2 Mol Alkoxid pro Mol Fettsäure umgesetzt worden sind. Besonders bevorzugt sind Umsetzungsprodukte der Fettsäuren mit Ethylenoxid. Wenn Alkoxylate, die sowohl Ethylenoxid (EO) als auch Propylenoxid (PO) enthalten vorliegen, so ist keine bestimmte Reihenfolge notwendig. Es können also sowohl EO/PO-Block Polymerisate als auch EO/PO Random-Polymerisate eingesetzt werden.

Die Diole der Formel (III) sind vorzugsweise ausgewählt aus Ethylenglycol, Diethylenglycol und Polyethylenglycol (PEG), wobei im letzteren Falle Mol-Gewichte von 100 bis 2000 bevorzugt sind. Vorzugsweise werden PEG mit Molgewichten > 300 und insbesondere 400 bis 600 eingesetzt. Daneben können aber auch Propylenglycol, Ethylenglycol und die höheren Homologen dieser Diole sowie deren Oligomere und Polymere verwendet werden. Weitere geeignete Diole im Rahmen der vorliegenden technischen Lehre sind das 1,2-Octandiol, 1,2-Decandiol, 1,2-Hexadecanol, 1,2-Octadecanol und/oder deren technische Mischungen. Derartige 1,2-Alkandiole sind beispielsweise zugänglich durch sauer katalysierte Ringöffnungen von endständig epoxydierten Alkanen mit Wasser. Weitere geeignete Diole sind α,ω-Alkandiole, die endständig je eine Hydroxylgruppe aufweisen, und durch Hydrierung der entsprechenden Dicarbonsäuren zugänglich sind.

Die Verbindungen der Formel (II) und (III) werden mit Dialkylcarbonaten der Formel (IV) in Gegenwart von alkalischen Katalysatoren umgesetzt. Bei den Dialkylcarbonaten handelt es sich um bekannte Verbindungen, wobei sowohl symmetrische (R₉ = R₁₀) als auch unsymmetrische (R₉ ≠ R₁₀) Verbindungen eingesetzt werden können. Besonders bevorzugt sind Dimethyl- (DMC) und Diethylcarbonate (DEC), d.h. R⁹ und R¹⁰ sind Methyl- bzw. Ethylreste.

Als basische Katalysatoren eignen sich beispielsweise Alkalimetallalkylate, insbesondere das Natriummethylat.

Polyestercarbonate der Formel (I) eignen sich als Gleitmittel in Spinnpräparationen für synthetische Filamentfasern. Der Gegenstand der vorliegenden Erfindung betrifft daher Spinnpräparationen, die als Gleitmittel Polyestercarbonate nach Formel (I) enthalten.

Es hat sich als vorteilhaft erwiesen, solche Verbindungen der Formel (I) auszuwählen, bei denen der Index k in der Formel (I) für eine Zahl von 1 bis 50 steht oder aber 0 bedeutet. Weiterhin ist es bevorzugt solche Polyestercarbonate auszuwählen, deren Reste R₁ und R₅ 6 bis 18 und vorzugsweise 6 bis 11 C-Atome enthalten. Die Reste R² und R³ bedeuten vorzugsweise CH₂CH₂- und/oder CH₂-CH(CH₃)-Gruppen bzw. Blöcke aus CH₂CH₂- und CH₂-CH(CH₃)-. Besonders bevorzugt sind solche Verbindungen der Formel (I) in der R³ für eine Gruppe CH₂CH₂- oder CH₂-CH(CH₃)- bedeutet, vorzugsweise eine Gruppe CH₂CH₂- bedeutet. Die Anzahl der Alkoxidgruppen, bestimmt durch die Indizes n und m in Formel (I) liegt vorzugsweise im Bereich von 2 bis 25, vorzugsweise bei 2 bis 15 und insbesondere im Bereich von 2 bis 10. Weiterhin ist es bevorzugt solche Polyestercarbonate der Formel (I) zu verwenden, deren Index 1 im Bereich von 1 bis 100, vorzugsweise im Bereich von 1 bis 50 und insbesondere im Bereich von 1 bis 20 liegt.

Vorzugsweise wird der Fachmann solche Polyestercarbonate auswählen, die wasserlöslich sind. Unter Wasserlöslichkeit wird im Rahmen der vorliegenden Anmeldung verstanden, daß eine 40 Gew.-%ige Lösung der Carbonate in Wasser bei 20 °C herstellbar ist, ohne daß es zu Ausfällungen oder Eintrübungen kommt. Es ist weiterhin bevorzugt solche Polyestercarbonate der Formel (I) auszuwählen, deren Resthydroxydzahl (OHZ - gemessen nach DIN 53 240-2 (12/1993)) höchstens bei 60 und vorzugsweise kleiner 30 liegt. Bezüglich der Restsäurezahl der Verbindungen der Formel (I) ist es bevorzugt, solche Polyestercarbonate auszuwählen, deren Säurezahl (SZ - gemessen nach DIN 53169) höchstens 5 und insbesondere höchsten 1 beträgt.

Erwähnt werden soll an dieser Stelle, daß die beschriebenen Polyestercarbonate auch eine Wirkung als assoziativ Verdicker aufweisen können, d. h. sie führen bei Lösung in Wasser zu einem deutlichen Viskositätsanstieg. Bei der Formulierung von Spinnpräparationen ist allerdings ein Viskositätsanstieg bei der Lösung in Wasser in aller Regel nicht erwünscht, da in diesem technischen Anwendungsfeld eine leichte Pumpbarkeit der Präparation gefordert wird. Diese Spinnpräparationen eignen sich vorzugsweise zum Einsatz bei der Herstellung synthetischer Fasern, wie Polypropylen, Polyester-, Polyamid oder deren Mischfasern.

Erfindungsgemäß werden solche Spinnpräparationen bevorzugt, die neben den Gleitmitteln gemäß Formel (I) noch Wasser und dieses vorzugsweise in Mengen von 80 bis 99 Gew.-%, bezogen auf die gesamte Präparation enthalten. Neben den Gleitmitteln können die erfindungsgemäßen Spinnpräparationen ferner Emulgatoren, Netzmittel und/oder Antistatika sowie ggf. übliche Hilfsmittel wie pH-Wert-Regulatoren, Fadenschlußmittel, Bakterizide und/oder Korrosionsschutzmittel enthalten.

Als Emulgatoren, Netzmittel und/oder Antistatika kommen anionische, kationische und/oder nichtionische Tenside in Betracht, wie Mono- und/oder Diglyceride, beispielsweise Glycerinmono- und/oder Glycerindioleat, alkoxylierte, vorzugsweise ethoxylierte und/oder propoxylierte Fette bzw. Öle, Fettalkohole mit 8 bis 24 C-Atomen und/oder C₈₋₁₈ Alkylphenole, beispielsweise Anlagerungsprodukte von 25 Mol Ethylenoxid an Rizinusöl und/oder Anlagerungsprodukte von 8 Mol Propylenoxid und 6 Mol Ethylenoxid an C₁₆₋₁₈-Fettalkohole, gewünschtenfalls alkoxylierte C₈₋₂₄-Fettsäurernono- und/oder Diethanolamide, beispielsweise - ggf. ethoxyliertes - Ölsäuremono- und/oder diethanolamid, Talgfettsäuremono- und/oder - diethanolamid und/oder Kokosfettsäuremono- und/oder -diethanolamid, Alkali- und/oder Ammoniumsalze alkoxylierter, vorzugsweise ethoxylierter und/oder propoxylierter, ggf. endgruppenverschlossener C₈₋₂₂-Alkyl- und/oder C₈₋₂₂-Alkylenalkoholsulfonate, Umsetzungsprodukte aus ggf. alkoxylierten C₈₋₂₂-Alkylalkoholen mit Phosphorpentoxid oder Phosphoroxychlorid in Form ihrer Alkali-, Ammonium- und/oder Aminsalze, beispielsweise Phosphorsäureester von ethoxylierten C₁₂₋₁₄-Fettalkoholen, neutralisiert mit Alkanolamin, Alkali- und/oder Ammoniumsalze von C₈₋₂₂-Alkylsulfosuccinaten, beispielsweise Natriumdioctylsulfosuccinat und/oder Aminoxiden, beispielsweise Dimethyldodecylaminoxid. Bei dieser beispielhaften Aufzählung ist zu berücksichtigen, daß eine Vielzahl der genannten Substanzen nicht nur eine Funktion, sondern auch mehrere Funktionen besitzen können; so kann ein Antistatikum etwa gleichzeitig als Emulgator wirken.

Fakultative Bestandteile können die üblichen Hilfsstoffe sein. Als Fadenschlußmittel sind die aus dem Stand der Technik bekannten Polyacrylate, Fettsäuresarcoside und/oder Mischpolymerisate mit Maleinsäureanhydrid (vergl. Melliand Textilberichte (1977), Seite 197) und/oder Polyurethane gemäß DE-A-38 36 468, pH-Wert-Regulatoren wie C₁₋₄-Hydroxycarbonsäuren, z. B. Essigsäure und/oder Glykolsäure, Alkalihydroxide wie Kaliumhydroxid und/oder Amine wie Triethanolamid, Bakterizide und/oder Korrosionsschutzmittel möglich.

Die erfindungsgemäßen Spinnpräparationen lassen sich durch intensives Vermischen der Polyestercarbonate (I) sowie ggf. weiterer Gleitmittel, Emulgatoren, Netzmittel, Antistatika und/oder üblicher Hilfsstoffe bei 18 bis 25 °C herstellen.

Wie in der Textilindustrie üblich, werden die Spinnpräparationen in Form ihrer wäßrigen Lösung, bzw. sofern keine ausreichende Löslichkeit vorliegt, in Form wäßriger Dispersionen, auf die synthetischen Filamentfasern unmittelbar nach Austritt aus der Spinndüse appliziert. Die Spinnpräparationen, die dabei eine Temperatur zwischen 18 und 60 °C haben, werden mit Hilfe von Auftragswalzen oder Dosierpunkten über geeignete Applikatoren aufgebracht. Bevorzugt werden Spinnpräparationen in Form ihrer wäßrigen Lösungen, die einen Gesamtaktivsubstanzgehalt zwischen etwa 1 und 45 Gew.-%, vorzugsweise zwischen 5 und 40 Gew.-%, aufweisen. Bezogen auf den Gesamtaktivsubstanzgehalt enthalten dabei die erfindungsgemäßen Spinnpräparationen
a) 35 bis 100 Gew.-% Gleitmittel,
b) 0 bis 65 Gew.-% Emulgatoren, Antistatika und/oder Netzmittel
c) 0 bis 10 Gew.-% pH-Wert-Regulatoren, Bakterizide und/oder Korrosionsschutzmittel,
wobei die Mengen so gewählt werden, daß sie sich zu 100 Gew.-% addieren. Die in dieser Aufzählung genannten Gleitmittel umfassen die beschriebenen Polyestercarbonate (I) ebenso wie die aus dem Stand der Technik bekannten Gleitmittel mit der Maßgabe, daß mindestens 50 Gew.-%, vorzugsweise mindestens 75 Gew.-% und insbesondere 100 Gew.-% der Gleitmittel, Polyestercarbonate der oben angegebenen allgemeinen Formel (I) sind. Besonders bevorzugt sind solche Gleitmittelpräparationen, die 1 bis 45 Gew.-% Gleitmittel nach Formel (I) und 99 bis 45 Gew.-% Wasser enthalten.

Die Auftragsmenge der Spinnpräparationen in Form ihrer wäßrigen Lösung liegt in dem für die Textilindustrie üblichen Bereich zwischen 0,1 und 3 Gew.-%, bezogen auf das Gewicht der Filamentfasern. Mit den erfindungsgemäßen Spinnpräparationen werden synthetische Filamentfasern aus Polypropylen, Polyester und/oder Polyamid versehen. Die erfindungsgemäßen Spinnpräparationen vermitteln den synthetischen Filamentfasern die erforderlichen Gleiteigenschaften. Auch während der Texturierung der synthetischen Filamentfasern beweisen die erfindungsgemäßen Spinnpräparationen genügend hohe thermische Stabilität, so daß keine bzw. nur geringe unerwünschte Ablagerungen auf den Filamentfasern und/oder den Texturierorganen festzustellen sind. Auch die Einkräuselung der in den erfindungsgemäßen Spinnpräparationen behandelten synthetischen Filamentfasern ist leicht möglich und beständig.

Neben der Verwendung als Gleitmittel in Spinnpräparationen eignen sich die Verbindungen der Formel (I) auch als Spulöle. Dabei handelt es sich um Gleitmittel, die nach dem Spinnprozeß auf die Fasern aufgetragen werden, um den textilen Weiterverarbeitungsprozeß, insbesondere Umspulprozesse, zu ermöglichen. Je nach Einsatzgebiet werden solche Spulöle auch als Schär-, Schuß-, Zwin- oder Stricköle bezeichnet. Die Spulöle werden in Mengen von 1 bis 4 Gew.-% auf die Fasern aufgetragen, so daß bei dieser Verwendung das Emissionspotential der Mittel gegenüber den Spinnpräparationen deutlich erhöht ist. Um so wichtiger ist bei dieser Verwendung daher die Auswahl emissionsarmer, ökologisch unbedenklicher Substanzen. Die Verbindungen der Formel (I) erfüllen derartige Anforderungen. Ein weiterer Erfindungsgegenstand betrifft daher die Verwendung von Verbindungen der Formel (I) als Spülöle für Synthesefasern.

### Beispiele

### Herstellung der erfindungsgemäß verwendeten Polyestercarbonate:

1. 779,1 g Laurinsäure x 7 EO (1,5 Mol) werden mit 300 g Polyethylenglycol (MG 400) (0,75 mol) und 236,3 g Dimethylcarbonat (2,7 Mol) in Gegenwart von 8.77 g Natriummethylat (30 %-ige Lösung in Methanol) zusammengegeben und unter Rühren auf 140 °C erwärmt. Die Reaktion war beendet wenn kein Methanol mehr abdestilliert werden konnte. OHZ: 27, SZ 0,5.
2. 779,1 g Laurinsäure x 7 EO (1,5 Mol) wurden mit 450 g Polyethylenglycol (MG 600) (0,75 Mol) und 236,3 g Dimethylcarbonat (2,7 Mol) in Gegenwart von 9.43 g Natriummethylat (30 %-ige Lösung in Methanol) wie unter 1. umgesetzt. OH-Zahl 21. Säurezahl 0,4 OHZ/SZ.
3. 701 g (1 Mol) einer Kokosfettsäure, alkoxyliert mit 2 Mol PO und 10 Mol EO, wurden mit 200 g Polyethylenglycol (MG 400) (0,5 Mol) und 157,5 g Dimethylcarbonat (1,75 Mol) in Gegenwart von 7,06 g Natriummethylat (30 %-ige Lösung in Methanol) umgesetzt. OH-Zahl 22, SZ 0,2.
4. 701,3 g (1 Mol) Kokosfettsäure, alkoxyliert mit 2 Mol PO und 10 Mol EO Fettsäure wurden mit 300 g Polyethylenglycol (MG 600) (0,5 Mol) und 157,5 g Dimethylcarbonat (1,75 Mol) in Gegenwart von 7,7 g Natriummethylat (30 %-ige Lösung Methanol) umgesetzt.
5. 660 g (1 Mol) einer Fettsäuremischung aus C₁₂-C₁₈ Fettsäuren, alkoxyliert mit 10,5 Mol EO, wurden mit 200 g Polyethylenglycol (MG 400) (0,5 Mol) und 157,5 g Dimethylcarbonat (1,75 Mol) in Gegenwart 6,78 g Natriummethylat (30 %-ige Lösung Methanol) umgesetzt. OHZ 27, SZ 0,8.
6. Wie 5., aber es wird PEG 600 verwendet.

V Vergleichsprodukt: 420,5 g Decylalkohol + 3 EO (1,5 Mol) wurden mit 300 g PEG 400 (0,75 Mol) und 236 g Dimethylcarbonat (2,6 Mol) in Gegenwart von 6,4 g Natriummethylat (30 %-ige Lösung Methanol) umgesetzt. OHZ: 21

In Tabelle 1 finden sich die Daten der einzelnen Muster aufgeführt:

**Tabelle 1**

| **Verbindung** | **Säurealkoxylat (1 Mol)** | **Mol DMC** | **MG PEG (1 Mol)** | **Konsistenz Aktivsubstanz** | **Löslichkeit in Wasser (40-%ig)** | **OHZ/SZ** |
|---|---|---|---|---|---|---|
| **1** | Laurinsäure x 7 EO | 1,8 | 400 | flüssig/setzt ab | klar löslich | 27.0/0.5 |
| **2** | Laurinsäure x 7 EO | 1,8 | 600 | flüssig/setzt ab | klar löslich | 21.0/0.4 |
| **3** | Kokosfettsäure x 2 PO x 10 EO | 1,75 | 400 | flüssig/setzt ab | klar löslich/ | 22.0/0.2 |
| **4** | Kokosfettsäure x 2 PO x 10 EO | 1,75 | 600 | flüssig/setzt ab | klar löslich | -/- |
| **5** | C₁₂₋₁₈ Fettsäuren x 10,5 EO | 1,75 | 400 | flüssig/setzt ab | klar löslich | 27.0/0.8 |
| **6** | C₁₂₋₁₈ Fettsäuren x 10,5 EO | 1,75 | 600 | flüssig/setzt ab | klar löslich | 25.0/1.0 |

### Tabelle 2 - Lagertest Polyestercarbonate

| | **Brookfield Viskosität (40%ig) (mPas)** | **Brookfield Viskosität nach 6 d/60°C (40%ig)** | **Brookfield Viskosität nach 25d/60°C (40%ig)** | **SZ (40%ig) nach 25 d/60 °C** |
|---|---|---|---|---|
| **1** | 520 | 480 | 464 | 0,71 |
| **2** | 924 | 850 | 720 | 0,90 |
| **3** | 608 | 470 | 416 | 0,53 |
| **4** | 280 | 240 | 188 | 0,68 |
| **5** | 1600 | 1500 | 825 | 0,85 |
| **6** | 1720 | 1160 | 338 | 0,78 |

Es wurden Polyamidfilamente (Garnart PA 6.-H₂O, dtex 74 sowie PES, dtex 265) mit Polyestercarbonaten nach den Beispielen 1 bis 6 aus wäßriger Lösung präpariert, so daß eine Ölauflage von 0,25, 0,5, 1,0 und 1,5 Gew.-% resultierte.

Die elektrostatische Aufladung an Keramik wurde bei Geschwindigkeiten (Reibstab mit 0,5 µ Rauhigkeit) von 20 und 200 m pro Minute gemessen mit Hilfe eines Eltecs-Induktiv-Voltmeters Klima: 20 °C, 65 % relative Feuchte.

Zum Vergleich wurde ein handelsübliches Produkt (Umsetzung eines ethoxylierten Fettalkohols mit DMC und PEG - Produkt V) unter gleichen Bedingungen vermessen. Die Ergebnisse sind in Tabelle 3 zusammengefaßt:

**Tabelle 3a - elektrostatische Aufladung (KV/m) auf PA 6 und 0,5 µ Reibstab bei einer Garngeschwindigkeit von 100 m/min. Angabe des dynamischen Reibungskoeffizienten (µ).**

| | **Auflage (in Gew.-%)** | | | | |
|---|---|---|---|---|---|
| **Präparation** | 0,25 | 0,50 | 1,00 | 1,50 | |
| **1** | -0,1 | 0,3 | - 0,9 | -1,0 | **KV/m** |
| | 0,400 | 0,388 | 0,480 | 0,591 | **µ** |
| **2** | 1,6 | 1,1 | -0,6 | -0,4 | **KV/m** |
| | 0,384 | 0,401 | 0,481 | 0,536 | **µ** |
| **3** | -1,5 | -1,9 | -1,4 | -1,3 | **KV/m** |
| | 0,408 | 0,397 | 0,457 | 0,513 | **µ** |
| **4** | -1,2 | -1,4 | -1,0 | -0,7 | **KV/m** |
| | 0,382 | 0,400 | 0,439 | 0,514 | **µ** |
| **5** | -0,2 | -1,4 | -1,2 | -0,7 | **KV/m** |
| | 0,396 | 0,401 | 0,455 | 0,542 | **µ** |
| **6** | -0,8 | -1,3 | -0,9 | -0,7 | **KV/m** |
| | 0,386 | 0,406 | 0,452 | 0,498 | **µ** |
| **V** | - 14 | - 2,4 | -1,9 | - 1,2 | **KV/m** |
| | 0,356 | 0,409 | 0,529 | 0,672 | **µ** |

**Tabelle 3b - elektrostatische Aufladung (KV/m) auf PA 6 und 0,5 µ Rauhigkeit bei einer Garngeschwindigkeit von 200 m/min. Angabe des dynamischen Reibungskoeffizienten µ.**

| **Auflage (in Gew.-%)** | | | | | |
|---|---|---|---|---|---|
| **Präparation** | 0,25 | 0,50 | 1,00 | 1,50 | |
| **1** | 1,7 | 2,6 | 0,0 | 0,0 | **KV/m** |
| | 0,427 | 0,413 | 0,481 | 0,558 | **µ** |
| **2** | 1,4 | 1,8 | 0,5 | 1,1 | **KV/m** |
| | 0,413 | 0,423 | 0,479 | 0,494 | **µ** |
| **3** | -0,3 | 0,1 | 1,6 | -0,4 | **KV/m** |
| | 0,428 | 0,418 | 0,454 | 0,480 | **µ** |
| **4** | -1,1 | -1,1 | -0,6 | -0,4 | **KV/m** |
| | 0,413 | 0,430 | 0,442 | 0,470 | **µ** |
| **5** | 0,9 | 0,3 | 0,1 | 0,2 | **KV/m** |
| | 0,425 | 0,428 | 0,464 | 0,495 | **µ** |
| **6** | -0,3 | 1,6 | 0,1 | 0,3 | **KV/m** |
| | 0,410 | 0,422 | 0,455 | 0,475 | **µ** |
| **V** | -2,7 | -2,5 | -1,6 | -0,5 | **KV/m** |
| | 0,396 | 0,448 | 0,550 | 0,678 | **µ** |

**Tabelle 3c - elektrostatische Aufladung (KV/m) auf PES und 0,5 µ Rauhigkeit bei einer Garngeschwindigkeit von 100 m/min. Angabe des dynamischen Reibungskoeffizienten µ.**

| **Auflage (in Gew.-%)** | | | | | |
|---|---|---|---|---|---|
| **Präparation** | 0,25 | 0,50 | 1,00 | 1,50 | |
| **1** | -0,8 | -1,8 | -1,2 | -0,6 | **KV/m** |
| | 0,387 | 0,376 | 0,451 | 0,559 | **µ** |
| **2** | -2,0 | -2,4 | -1,3 | -0,6 | **KV/m** |
| | 0,389 | 0,355 | 0,442 | 0,558 | **µ** |
| **3** | -1,9 | -4,2 | -1,2 | -0,5 | **KV/m** |
| | 0,394 | 0,368 | 0,457 | 0,594 | **µ** |
| **4** | -1,9 | -1,4 | -0,7 | -0,2 | **KV/m** |
| | 0,377 | 0,408 | 0,502 | 0,624 | **µ** |
| **5** | -1,4 | -2,2 | -0,6 | -0,4 | **KV/m** |
| | 0,375 | 0,349 | 0,471 | 0,529 | **µ** |
| **6** | -1,7 | -1,5 | -0,9 | -0,2 | **KV/m** |
| | 0,362 | 0,389 | 0,444 | 0,538 | **µ** |
| **V** | -0,9 | -0,5 | -0,1 | -0,5 | **KV/m** |
| | 0,356 | 0,409 | 0,529 | 0,672 | **µ** |

**Tabelle 3d - elektrostatische Aufladung (KV/m) auf PES und 0,5 µ Rauhigkeit bei einer Garngeschwindigkeit von 200 m/min. Angabe des dynamischen Reibungskoeffizienten µ,**

| **Auflage (in Gew.-%)** | | | | | |
|---|---|---|---|---|---|
| **Präparation** | 0,25 | 0,50 | 1,00 | 1,50 | |
| **1** | -1,9 | -2,7 | -1,9 | -1,4 | **KV/m** |
| | 0,418 | 0,414 | 0,490 | 0,542 | **µ** |
| **2** | -10,2 | -4,7 | -1,7 | -1,2 | **KV/m** |
| | 0,388 | 0,410 | 0,478 | 0,528 | **µ** |
| **3** | -7,5 | -2,6 | -1,6 | -1.0 | **KV/m** |
| | 0,400 | 0,403 | 0,485 | 0,549 | **µ** |
| **4** | -6,8 | -2,6 | -1,3 | -0.5 | **KV/m** |
| | 0,380 | 0,420 | 0,498 | 0,557 | **µ** |
| **5** | -7,5 | -2,6 | -1,6 | -1,0 | **KV/m** |
| | 0,385 | 0,391 | 0,460 | 0,505 | **µ** |
| **6** | -6,8 | -2,6 | -1,3 | -0,5 | **KV/m** |
| | 0,374 | 0,407 | 0,460 | 0,498 | **µ** |
| **V** | -2,8 | -1,5 | -0,3 | 0,0 | **KV/m** |
| | 0,396 | 0,448 | 0,550 | 0,678 | **µ** |

## Patentansprüche

1. Spinnpräparation für synthetische Garne, enthaltend ein Gleitmittel, **dadurch gekennzeichnet, daß** als Gleitmittel Polyestercarbonate nach Formel (I) enthalten
R¹-CO-O-(R²O)ₙ-[C(O)O-(R³O)ₗ-]ₖ-CO-(OR⁴)ₘ-O-CO-R⁵ (I)
in der gilt:
R¹, R⁵: unabhängig voneinander lineare oder verzweigte, gesättigte oder ungesättigte Alkylreste mit 6 bis 21 C-Atomen
R², R⁴: unabhängig voneinander Alkylreste mit 2 bis 4 C-Atomen
R³: gesättigter oder ungesättigter, linearer oder verzweigter, zweiwertiger Kohlenwasserstoffrest mit 1 bis 22 C-Atomen
k: 0 oder 1 bis 50
l: 1 bis 300
n: 2 bis 50
m: 2 bis 50

2. Spinnpräparation nach Anspruch 1, **dadurch gekennzeichnet, dass** Polyestercarbonate der Formel (I) enthalten sind, in denen k eine Zahl von 1 bis 50 bedeutet.

3. Spinnpräparation nach Anspruch 1 oder 2, **dadurch gekennzeichnet, dass** Polyestercarbonate der Formel (I) enthalten sind, in denen k Null bedeutet.

4. Spinnpräparation nach den Ansprüchen 1 bis 3, **dadurch gekennzeichnet, daß** Polyestercarbonate der Formel (I) enthalten sind, in denen die Reste R² und R³ - CH₂CH₂-und/oder -CH₂-CH(CH₃)-Gruppen bedeuten.

5. Spinnpräparation nach den Ansprüchen 1 bis 4, **dadurch gekennzeichnet, daß** Polyestercarbonate der Formel (I) enthalten sind, in denen R³ eine Gruppe -CH₂CH₂- oder -CH₂-CH(CH₃)- bedeutet, vorzugsweise eine Gruppe -CH₂CH₂-.

6. Spinnpräparation nach den Ansprüchen 1 bis 5, **dadurch gekennzeichnet, daß** Polyestercarbonate der Formel (I) enthalten sind, in denen R¹ und R⁵ Reste mit 6 bis 18 und vorzugsweise 6 bis 11 C-Atomen bedeuten.

7. Spinnpräparation nach den Ansprüchen 1 bis 6, **dadurch gekennzeichnet, daß** Polyestercarbonate der Formel (I) enthalten sind, in denen n und m unabhängig voneinander Zahlen von 2 bis 25, vorzugsweise 2 bis 15 und insbesondere von 2 bis 10 bedeuten.

8. Spinnpräparation nach den Ansprüchen 1 bis 7, **dadurch gekennzeichnet, daß** Polyestercarbonate der Formel (I) enthalten sind, in denen I eine Zahl von 1 bis 100, vorzugsweise von 1 bis 50 und insbesondere von 1 bis 20 bedeutet.

9. Spinnpräparation nach den Ansprüchen 1 bis 8, **dadurch gekennzeichnet, daß** Polyestercarbonate der Formel (I) enthalten sind, die wasserlöslich sind.

10. Spinnpräparation nach den Ansprüchen 1 bis 9, **dadurch gekennzeichnet, daß** Polyestercarbonate der Formel (I) enthalten sind, die eine Hydroxylzahl von höchstens 60 aufweisen.

11. Spinnpräparation nach den Ansprüchen 1 bis 10, **dadurch gekennzeichnet, daß** Polyestercarbonate der Formel (1) enthalten sind, die eine Säurezahl von höchstens 5 und vorzugsweise von höchstens 1 aufweisen.

12. Spinnpräparation nach den Ansprüchen 1 bis 11, **dadurch gekennzeichnet, daß** neben dem Gleitmittel Wasser enthalten ist.

13. Spinnpräparation nach Anspruch 12, **dadurch gekennzeichnet, daß** Wasser in Mengen von 55 bis 99 Gew.-% enthalten ist.

14. Verwendung von Verbindungen der Formel (I) als Gleitmittel in Spinnpräparationen für synthetische Fasern.

15. Verwendung von Verbindungen der Formel (I) als Spulöle für synthetische Fasern.

## Claims

1. Spin finish for synthetic yarns containing a lubricant, **characterized in that** it contains as the lubricant a polyester carbonate corresponding to general formula (I):
R¹-CO-O-(R²O)ₙ-[C(O)O-(R³O)ₗ-]ₖ-CO-(OR⁴)ₘ-O-CO-R⁵ (I)
in which
R¹ and R⁵ independently of one another represent linear or branched, saturated or unsaturated alkyl groups containing 6 to 21 carbon atoms,
R² and R⁴ independently of one another represent alkyl groups containing 2 to 4 carbon atoms,
R³ represents a saturated or unsaturated, linear or branched difunctional hydrocarbon radical containing 1 to 22 carbon atoms,
k has a value of 0 or 1 to 50,
I has a value of 1 to 300,
n has a value of 2 to 50 and
m has a value of 2 to 50.

2. Spin finish as claimed in claim 1, **characterized in that** it contains polyester carbonates corresponding to formula (I) in which k has a value of 1 to 50.

3. Spin finish as claimed in claim 1 or 2, **characterized in that** it contains polyester carbonates corresponding to formula (I) in which k has a value of 0.

4. Spin finish as claimed in claims 1 to 3, **characterized in that** it contains polyester carbonates corresponding to formula (I) in which the substituents R² and R³ are CH₂CH₂- and/or CH₂-CH(CH₃)- groups.

5. Spin finish as claimed in claims 1 to 4, **characterized in that** it contains polyester carbonates corresponding to formula (I) in which the substituent R³ is a CH₂CH₂- or CH₂-CH(CH₃)- group, preferably a CH₂CH₂-group.

6. Spin finish as claimed in claims 1 to 5, **characterized in that** it contains polyester carbonates corresponding to formula (I) in which R¹ and R⁵ are substituents containing 6 to 18 and preferably 6 to 11 carbon atoms.

7. Spin finish as claimed in claims 1 to 6, **characterized in that** it contains polyester carbonates corresponding to formula (I) in which n and m independently of one another are numbers of 2 to 25, preferably 2 to 15 and more particularly 2 to 10.

8. Spin finish as claimed in claims 1 to 7, **characterized in that** it contains polyester carbonates corresponding to formula (I) in which I is a number of 1 to 100, preferably 1 to 50 and more particularly 1 to 20.

9. Spin finish as claimed in claims 1 to 8, **characterized in that** it contains polyester carbonates corresponding to formula (I) which are water-soluble.

10. Spin finish as claimed in claims 1 to 9, **characterized in that** it contains polyester carbonates corresponding to formula (I) which have a hydroxyl value of at most 60.

11. Spin finish as claimed in claims 1 to 10, **characterized in that** it contains polyester carbonates corresponding to formula (I) which have an acid value of at most 5 and preferably of at most 1.

12. Spin finish as claimed in claims 1 to 11, **characterized in that**, besides the lubricant, they contain water.

13. Spin finish as claimed in claim 12, **characterized in that** water is present in quantities of 55 to 99% by weight.

14. The use of compounds corresponding to formula (I) as lubricants in spin finishes for synthetic fibres.

15. The use of compounds corresponding to formula (I) as winding oils for synthetic fibres.

## Revendications

1. Préparation de filage pour fils synthétiques, contenant un lubrifiant,
**caractérisée en ce qu'**
elle contient comme lubrifiant des carbonates de polyester de formule (I)
**R¹-CO-O-(R²O)ₙ-[C(O)O-(R³O)ₗ-)ₖ-CO-(OR⁴)ₘ-O-CO-R⁵** **(I)**
dans laquelle
R¹, R⁵ : sont indépendamment l'un de l'autre, des radicaux alkyle linéaires ou ramifiés, saturés ou insaturés, comportant de 6 à 21 atomes de C,
R², R⁴ : sont indépendamment l'un de l'autre, des radicaux alkyle comportant de 2 à 4 atomes de C,
R³ : est un radical hydrocarbure bivalent, saturé ou insaturé, linéaire ou ramifié, comportant de 1 à 22 atomes de C,
k : 0 ou 1 à 50
l : 1 à 300
n : 2 à 50
m : 2 à 50

2. Préparation de filage selon la revendication 1,
**caractérisée en ce qu'**
elle contient des carbonates de polyester de formule (I) dans lesquels k est un nombre de 1 à 50.

3. Préparation de filage selon la revendication 1 ou 2,
**caractérisée en ce qu'**
elle contient des carbonates de polyester de formule (I) dans lesquels k est égal à zéro.

4. Préparation de filage selon les revendications 1 à 3,
**caractérisée en ce qu'**
elle contient des carbonates de polyester de formule (I) dans lesquels R² et R³ représentent des groupes -CH₂CH₂- et/ou -CH₂-CH(CH₃).

5. Préparation de filage selon les revendications 1 à 4,
**caractérisée en ce qu'**
elle contient des carbonates de polyester de formule (I) dans lesquels R³ représente un groupe -CH₂CH₂ ou -CH₂-CH(CH₃-), de préférence un groupe -CH₂CH₂-.

6. Préparation de filage selon les revendications 1 à 5,
**caractérisée en ce qu'**
elle contient des carbonates de polyester de formule (I) dans lesquels R¹ et R⁵ représentent des radicaux comportant de 6 à 18, et de préférence de 6 à 11 atomes de C.

7. Préparation de filage selon les revendications 1 à 6,
**caractérisée en ce qu'**
elle contient des carbonates de polyester de formule (I) dans lesquels n et m, représentent indépendamment l'un de l'autre, des nombres de 2 à 25, de préférence de 2 à 15 et, en particulier, de 2 à 10.

8. Préparation de filage selon les revendications 1 à 7,
**caractérisée en ce qu'**
elle contient des carbonates de polyester de formule (I) dans lesquels 1 représente un nombre de 1 à 100, de préférence de 1 à 50 et, en particulier, de 1 à 20.

9. Préparation de filage selon les revendications 1 à 8,
**caractérisée en ce qu'**
elle contient des carbonates de polyester de formule (I) solubles dans l'eau.

10. Préparation de filage selon les revendications 1 à 9,
**caractérisée en ce qu'**
elle contient des carbonates de polyester de formule (I) présentant un indice hydroxyle d'au maximum 60.

11. Préparation de filage selon les revendications 1 à 10,
**caractérisée en ce qu'**
elle contient des carbonates de polyester de formule (I) présentant un indice d'acide d'au maximum 5 et, de préférence, d'au maximum 1.

12. Préparation de filage selon les revendications 1 à 11,
**caractérisée en ce qu'**
elle contient de l'eau en plus du lubrifiant.

13. Préparation de filage selon la revendication 12,
**caractérisée en ce qu'**
elle contient de l'eau en quantité de 55 à 99 % en poids.

14. Utilisation de composés de formule (I), comme lubrifiant dans des préparations de filage de fibres synthétiques.

15. Utilisation de composés de formule (I), comme huiles de bobinage pour fibres synthétiques.
